# EUROPEAN PATENT APPLICATION

(11) **EP 4 707 727 A1**
(43) Date of publication of application: **11.03.2026**
(21) Application number: 24216597.5
(22) Date of filing: 29.11.2024
(51) Int. Cl.: G01B 11/275

(54) **CALIBRATION SYSTEM AND FOUR-WHEEL ALIGNER**

(30) Priority: 09.09.2024 CN 202422212153 U
(71) Applicant: Shenzhen Smartsafe Tech Co., Ltd., Shenzhen, Guangdong 518000 (CN)
(72) Inventor: ZHAN, Wei, Shenzhen, 518000 (CN); WANG, Qingwei, Shenzhen, 518000 (CN); GU, Shaoli, Shenzhen, 518000 (CN)
(74) Representative: MERH-IP Matias Erny Reichl Hoffmann Patentanwälte PartG mbB

(57) **Abstract**

The present application relates to the field of vehicle detection technology, and provides a calibration system and a four-wheel aligner. The calibration system includes a first device (100) and a second device (200) for use in pairs. The first device (100) and the second device (200) are respectively arranged on the side of the vehicle (91) to be detected where the wheel (92) to be measured is arranged. The first device (100) includes a first camera (31), and the second device (200) includes a calibration member (32). The first camera (31) of the first device (100) is configured to obtain the first image information of the calibration member (32) of the second device (200) on the opposite side. The control device is connected to the first camera (31), and is configured to receive the first image information from the first camera (31) and process the first image information. The calibration system of the present application obtains the first image information of the second device (200) on the opposite side through the first camera (31). The distance relationship and relative position relationship between the first device (100) and the second device (200) can be detected through the first image information. When the four-wheel alignment detection is performed by a four-wheel aligner including the calibration system, the accuracy of the detection can be guaranteed.

## Description

### TECHNICAL FIELD

The present application relates to the field of vehicle detection technology, more particularly to a calibration system and a four-wheel aligner.

### BACKGROUND

For vehicles, the impact of four-wheel alignment detection on the safety of the entire vehicle is crucial. If the wheel parameters are abnormal, it will directly affect the driving safety and daily use of the vehicle.

The four-wheel alignment detection of the vehicle obtains the parameter information of each wheel of the vehicle by using the calibration detection device in the four-wheel aligner. Specifically, a reference member for detection is fixedly mounted on each wheel, and a calibration detection device is mounted at a fixed position outside the vehicle to be detected. The reference member can be detected by the calibration detection device to obtain the parameter information of each wheel. Before the calibration detection, it is necessary to ensure that the calibration detection devices on both sides are mounted at a predetermined position to ensure the accuracy of their four-wheel alignment detection of the vehicle.

In the existing four-wheel aligner, the calibration detection devices on both sides are mounted separately, and the positions of the calibration detection devices on both sides may be deviated, which results in deviations in the detection of the four-wheel alignment of the vehicle.

### SUMMARY

It is an objective of the embodiment of the present application to provide a calibration system, which aims to solve the technical problem that the existing four-wheel aligner has deviations in the detection of four-wheel alignment of the vehicle.

The embodiment of the present application is implemented as follows: a calibration system includes a first device and a second device for use in pairs. The first device and the second device are respectively arranged on a side of the vehicle to be detected where the wheel to be measured is arranged;
the first device includes a first camera, and the second device includes a calibration member:
the first camera of the first device is configured to obtain first image information of the calibration member of the second device located on an opposite side;
the control device is connected to the first camera, and is configured to receive the first image information from the first camera and process the first image information.

In one embodiment, the second device further includes the first camera, the first device further includes the calibration member, the first camera of the second device is configured to obtain the first image information of the calibration member of the first device; the control device includes a first control module arranged in the first device, and a second control module arranged in the second device, the first control module is connected to the first camera of the first device, and the second control module is connected to the first camera of the second device; and
the first control module and the second control module are both connected to a control terminal for communication, the control terminal is configured to receive the first image information from the first control module and the first image information from the second control module, and process the two first image information; or, the first control module and the second control module are both connected to the control terminal for communication, the first control module is configured to receive the first image information obtained by the control device from the second control module, and process the two first image information; or, the first control module is configured to receive the first image information from the second control module, and process the two first image information.

In one embodiment, a plurality of calibration members are provided, and projections of the plurality of calibration members along a width direction of the vehicle to be detected do not overlap; along the width direction of the vehicle to be detected, a distances between at least two calibration members and the vehicle to be detected are different; each of the plurality of calibration members is provided with at least one calibration point.

In one embodiment, four calibration members are provided, a first of the four calibration members and a third of the four calibration members are arranged at intervals along a length direction of the vehicle to be detected; a second of the four calibration members is located at a lower side of the first of the four calibration members and at a side of the first of the four calibration members adjacent to the vehicle to be detected, and a fourth of the four calibration members is located at an upper side of the first of the four calibration members and at a side of the first of the four calibration members away from the vehicle to be detected.

In one embodiment, each of the plurality of calibration members includes a light plate and a target plate that are stacked, the target plate is located on a side of the light plate facing the vehicle to be detected; the target plate is provided with at least one through hole, and the at least one through hole forms the calibration point.

In one embodiment, the calibration member includes a light plate and a target plate that are stacked, the target plate is located on a side of the light plate facing the vehicle to be detected; the target plate is provided with a plurality of step surfaces on a side away from the light plate, and distances from each of the plurality of step surfaces to the light plate are different; each of the plurality of step surfaces is provided with at least one through hole, and the at least one through hole forms a calibration point.

In one embodiment, the calibration member further includes a diffuser plate arranged between the light plate and the target plate.

In one embodiment, a light emitted by the light plate is invisible light.

In one embodiment, the first device and the second device both comprise a magnetic attraction seat, and the first device and the second device are fixed to a bearing device for bearing the vehicle to be detected through the magnetic attraction seat, and are respectively located on sides of the vehicle to be detected where the wheel to be measured is provided.

Another object of the embodiment of the present application is to provide a four-wheel aligner, including the calibration system as described in the above embodiments; the first device and the second device both comprise two second cameras; the two second cameras of the first device are configured to obtain second image information of auxiliary tools on front wheel and the rear wheel on a side of the vehicle to be detected, and the two second cameras of the second device are configured to obtain second image information of auxiliary tools on a front wheel and a rear wheel on another side of the vehicle to be detected; the control device is connected to each of the second cameras to receive each of the second image information and process the second image information.

The calibration system and the four-wheel aligner provided in the embodiment of the present application have the following beneficial effects: through the first device and the second device used in pairs, the first device and the second device are configured to be respectively arranged on one side of the vehicle to be detected where the wheel to be measured is provided, the first device includes the first camera, and the second device includes the calibration member; the first camera of the first device is configured to obtain the first image information of the calibration member of the second device located on the opposite side; the control device is connected to the first camera to receive the first image information from the first camera and process the first image information. The calibration system of the present application obtains the first image information of the second device on the opposite side through the first camera. The distance relationship and relative position relationship between the first device and the second device can be detected through the first image information. When the four-wheel alignment detection is performed by a four-wheel aligner including the calibration system, the accuracy of the detection can be guaranteed.

### BRIEF DESCRIPTION OF THE DRAWINGS

In order to more clearly illustrate the technical scheme in the embodiments of the present application, the drawings required to be used in the embodiments will be briefly introduced below. Obviously, the drawings described below are only some embodiments of the present application. For ordinary technicians in this field, other drawings can be obtained based on these drawings without creative work.
FIG. 1 is a schematic diagram of an overall structure of a first device in a calibration system provided in an embodiment of the present application;
FIG. 2 is a three-dimensional exploded schematic diagram of a first device in a calibration system provided in an embodiment of the present application;
FIG. 3 is a structural schematic diagram of a calibration assembly and a detection assembly in a calibration system provided in an embodiment of the present application;
FIG. 4 is a three-dimensional exploded schematic diagram of a calibration assembly and a detection assembly in a calibration system provided in an embodiment of the present application;
FIG. 5 is a structural schematic diagram of a calibration assembly in a calibration system provided in an embodiment of the present application;
FIG. 6 is a structural schematic diagram of a calibration member in a calibration system provided in an embodiment of the present application;
FIG. 7 is another structural schematic diagram of a calibration member in a calibration system provided in an embodiment of the present application;
FIG. 8 is a three-dimensional exploded schematic diagram of a detection assembly in a calibration system provided in an embodiment of the present application; and
FIG. 9 is a schematic diagram of using a four-wheel aligner provided in an embodiment of the present application.

In the drawings, the reference signs are listed as follows:
100-first device, 200-second device, 91-vehicle to be detected, 92-wheel to be measured, 93-bearing device;
1-housing;
2-magnetic base;
3-calibration assembly, 30-base plate, 31-first camera, 32-calibration member, 321-light plate, 322-target plate, 3220-through hole, 3221-step surface, 323-diffuser plate, 325-fixing plate, 3250-opening, 33-switching circuit plate;
4-detection assembly, 41-first mounting plate, 42-second mounting plate, 43-second camera, 44-fill light;
51-first control module;
6-battery; and
7-indicator light.

### DETAILED DESCRIPTION OF EMBODIMENTS

In order to clarify the objectives, technical solutions and advantages of the embodiments of the present application, the following is a detailed description of the present application in conjunction with the accompanying drawings and embodiments. It should be understood that the specific embodiments described herein are only configured to explain the present application and are not configured to limit the present application.

It should be noted that when a component is referred to as "fixed on" or "set on" another component, it can be directly or indirectly on the other component. When a component is referred to as "connected to" another component, it can be directly or indirectly connected to the other component. The orientation or position relationship indicated by the terms "upper", "lower", "left", "right", etc. is based on the orientation or position relationship shown in the accompanying drawings, and is only for the convenience of description, rather than indicating or implying that the device or element referred to must have a specific orientation, be constructed and operated in a specific orientation, and therefore cannot be understood as a limitation on this patent. The terms "first" and "second" are only used for the convenience of description, and cannot be understood as indicating or implying relative importance or implicitly indicating the number of technical features. "Multiple" means two or more, unless otherwise clearly and specifically defined.

In order to illustrate the technical solution described in the present application, the following is a detailed description in conjunction with specific drawings and embodiments.

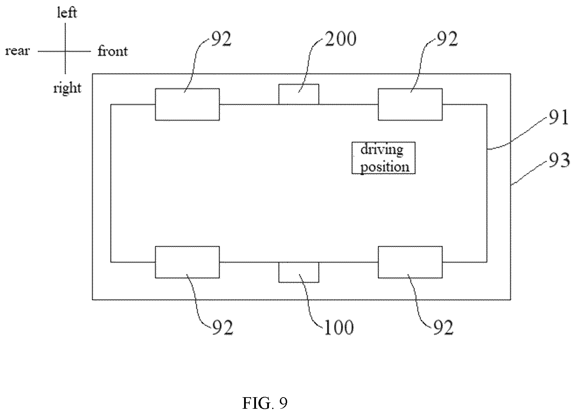

As shown in FIG. 9, the embodiment of the present application provides a four-wheel aligner, including a calibration system and an auxiliary tool. The calibration system is configured to be arranged outside the vehicle to be detected 91, and the auxiliary tool is configured to be fixed on the wheel to be measured 92 of the vehicle to be detected 91. The four-wheel aligner directly or indirectly obtains the relevant image information of the wheel to be measured 92 by detecting or probing the auxiliary tool, and then performs a four-wheel alignment detection on the vehicle to be detected 91.

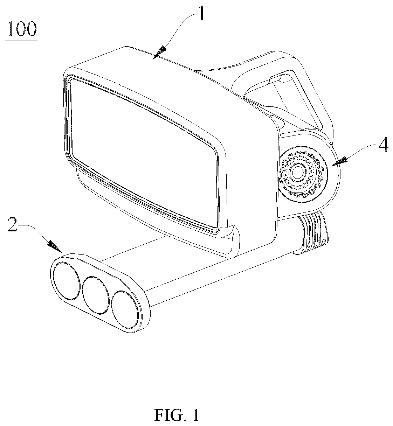

As shown in FIGS. 1, 2, and 9, the calibration system includes a first device 100 and a second device 200, and the first device 100 and the second device 200 are configured to be mounted at a fixed position outside the vehicle to be detected 91, and are respectively located on opposite sides of the vehicle to be detected 91, which refers to the left and right sides.

For example, as shown in FIG. 9, based on the direction of the driving position, the first device 100 is arranged on the right side of the vehicle to be detected 91, and is configured to detect the right front wheel and the right rear wheel of the vehicle to be detected 91, and the second device 200 is arranged on the left side of the vehicle to be detected 91, and is configured to detect the left front wheel and the left rear wheel of the vehicle to be detected 91.

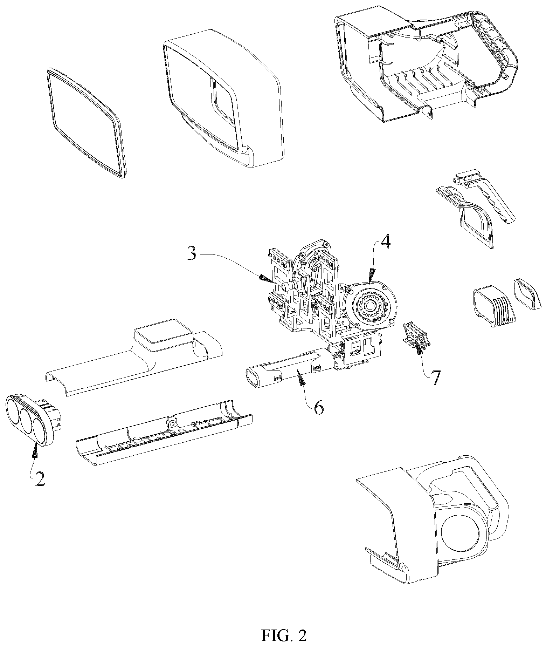

In the embodiment of the present application, the first device 100 includes a first camera 31, and the second device 200 includes a calibration member 32 (refer to the calibration member 32 of the first device 100 shown in FIG. 2). The first camera 31 of the first device 100 is configured to obtain first image information of the first camera 31 and the calibration member 32 of the second device 200 located on the opposite side; the calibration system also includes a control device, which is connected to the first camera 31 of the first device 100, and is configured to receive the first image information from the first camera 31 and process the first image information.

The first camera 31 is a non-depth camera, and the first image information obtained by the first camera 31 is a plane image information, which does not contain depth of field information. The control device receives the plane image information, processes a plurality of feature points in the plane image information, and then converts the plurality of feature points into a relative position relationship between the first device 100 and the second device 200.

That is, the first device 100 can obtain the first image information between the first device 100 and the second device 200 on the opposite side through the first camera 31, and the relative position relationship between the first device 100 and the second device 200 can be detected through the first image information. In this way, the staff can know whether the first device 100 and the second device 200 are mounted at the predetermined position at the same time. On this basis, when the four-wheel alignment detection is performed on the wheels to be measured 92 on both sides by the four-wheel aligner, the detection accuracy of the two can be guaranteed.

In the technical solution of this embodiment, the first device 100 and the second device 200 are used in pairs, and the first device 100 and the second device 200 are configured to be respectively arranged on the sides of the vehicle to be detected 91 where the wheels to be measured 92 is provided. The first device 100 includes the first camera 31, and the second device 200 includes the calibration member 32; the first camera 31 of the first device 100 is configured to obtain the first image information of the calibration member 32 of the second device 200 located on the opposite side; the control device is connected to the first camera 31, and is configured to receive the first image information from the first camera 31 and process the first image information. The calibration system of the present application obtains the first image information of the second device 200 on the opposite side through the first camera 31. The distance relationship and relative position relationship between the first device 100 and the second device 200 can be detected through the first image information. When the four-wheel alignment detection is performed by the four-wheel aligner including the calibration system, the accuracy of the detection can be guaranteed.

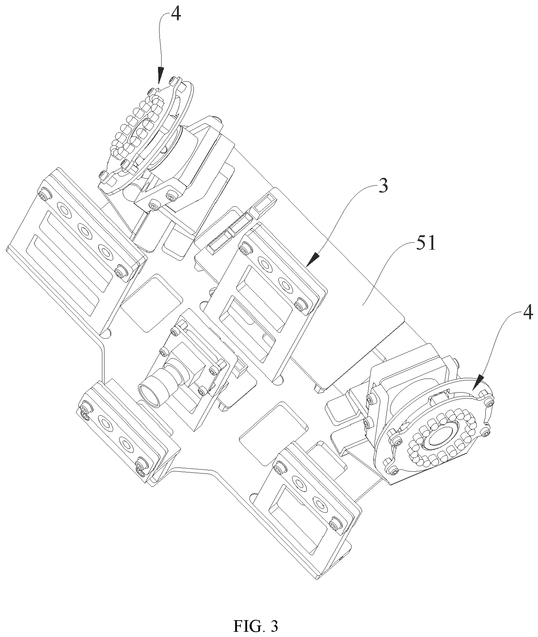

In an optional embodiment, as shown in FIGS. 2 and 3, the first device 100 also includes the calibration member 32, and the second device 200 also includes the first camera 31. In this way, the first camera 31 of the second device 200 is configured to obtain the first image information of the calibration member 32 in the first device 100. The control module is connected to the first camera 31 of the second device 200 to obtain the first image information provided by the first camera 31. That is, the mutual calibration of the first device 100 and the second device 200 is realized. Through the mutual calibration of the two first image information, it can be further ensured that the first device 100 and the second device 200 are mounted at the predetermined position at the same time, and the detection accuracy of the two can be further improved.

The control device can be arranged in the first device 100, or in the second device 200, or in both the second device 200 and the first device 100.

In an optional embodiment, the control device includes a first control module 51 arranged in the first device 100, and a second control module arranged in the second device 200, the first control module 51 is connected to the first camera 31 of the first device 100, and the second control module is connected to the first camera 31 of the second device 200. This is conducive to the first control module 51 and the second control module being connected to different first cameras 31 respectively.

In this way, the first device 100 and the second device 200 can be as similar in structure as possible, that is, the first device 100 and the second device 200 can be completely the same device (the communication method of the first control module 51 and the second control module is not considered herein). The first device 100 and the second device 200 can be batch processed and manufactured according to unified requirements and processes. In the following description of the present application, this is used as an example for explanation. FIGS. 1 and 2 show a first device 100 including a first camera 31 and a calibration member 32. For the first device 100, at least the first camera 31 and the calibration member 32 constitute the calibration assembly 3, as shown in FIGS. 2 and 3.

In one embodiment, the first control module 51 and the second control module are configured to be both connected to the control terminal for communication, and the control terminal is configured to receive the first image information from the first control module 51 and the first image information from the second control module, and process the two first image information. The control terminal can be a smart device such as a mobile phone or a smart tablet.

Alternatively, the first control module 51 and the second control module are both connected to the control terminal for communication, and the first control module 51 is configured to receive the first image information obtained by the control terminal from the second control module, and process the two first image information. That is, the control terminal plays the function of transferring the first image information between the first control module 51 and the second control module. It can be understood that the control terminal can also receive the processing result from the first control module 51 and display the processing result.

Alternatively, the first control module 51 is configured to receive the first image information from the second control module and process the two first image information. At this time, the first control module 51 serves as the main control terminal.

As shown in FIGS. 1 and 2, in one embodiment, the first device 100 includes a magnetic base 2, and the first device 100 is mounted at a fixed position outside the vehicle to be detected 91 through the magnetic base 2, for example, the first device 100 is attracted on a bearing device 93 for bearing the vehicle to be detected 91 through the magnetic base 2. The bearing device 93 is specifically a lifting machine.

The magnetic base 2 can include a permanent magnet or an electromagnet.

As shown in FIG. 2, in one embodiment, the first device 100 and the second device 200 also include a battery 6 for providing the first camera 31 (and the electromagnet) and the like with the required power for operation. The first device 100 and the second device 200 also include an indicator light 7, which is connected to the control device and is configured to display the working status of the first camera 31 and the like.

As shown in FIG. 2, in one embodiment, the first device 100 and the second device 200 also include a housing 1, which is configured to accommodate the above-mentioned first camera 31, the calibration member 32, the control device, the battery 6, etc. The magnetic base 2 is fixedly connected to one end of the housing 1. The style of the housing 1 is not limited, and it is usually designed to match the relative positions of the first camera 31, the calibration member 32, the battery 6, the control device, etc. inside the housing 1, which is convenient for the staff to take the housing 1.

In order to ensure the accuracy of the relative position calibration between the first device 100 and the second device 200, a plurality of calibration points are provided on the calibration member 32, and the plurality of calibration points are arranged at different positions in the space, so that the distances from the plurality of calibration points to the first camera 31 are different.

Take the case where the first control module 51 and the second control module are both connected to the control terminal for communication, and the control terminal is configured to receive the first image information from the first control module 51 and the first image information from the second control module, and process the two first image information as an example: the plurality of first image information are all transmitted to the control terminal, and the control terminal processes each first image information and converts the first image information into a plurality of coordinate points of the first device 100 in the coordinate system of the second device 200, and a plurality of coordinate points of the second device 200 in the coordinate system of the first device 100. In this way, the mutual calibration of the three-dimensional space coordinates between the first device 100 and the second device 200 can be achieved.

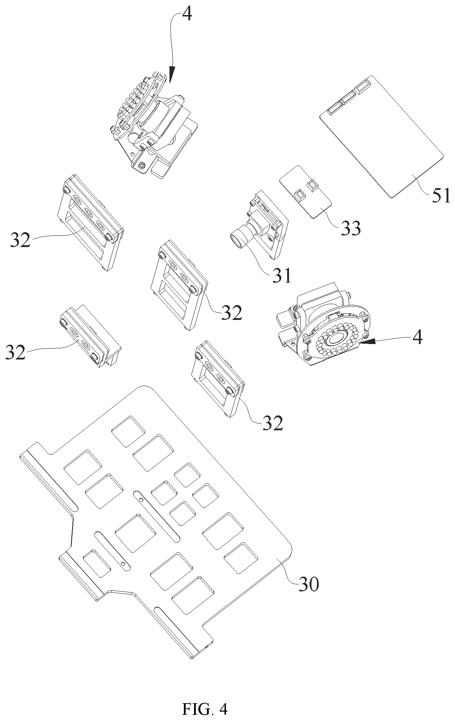

As shown in FIGS. 4, 5 and 6, in one embodiment, a plurality of calibration members 32 are provided, and the projections of the plurality of calibration members 32 along the width direction of the vehicle to be detected 91 do not completely overlap; the distances between at least two calibration members 32 and the vehicle to be detected 91 in the width direction of the vehicle to be detected 91 are different; and at least one calibration point is provided on each calibration member 32. In this way, the plurality of calibration points with different distances from the vehicle to be detected 91 in the width direction can be formed. In other words, in the length direction of the vehicle to be detected 91, at least two calibration members 32 are staggered, and thus, the distances from the at least two calibration members 32 to the first camera 31 are different.

Optionally, in one embodiment, a plurality of calibration members 32 are provided, and at least two calibration members 32 are arranged at intervals in the length direction of the vehicle to be detected 91, at least two calibration members 32 are arranged at intervals in the width direction of the vehicle to be detected 91, and at least two calibration members 32 are arranged at intervals in the height direction. In this way, the plurality of calibration points have coordinate points on each coordinate axis in the three-dimensional coordinate system, and the control module calibrates the positions of the calibration members 32 more accurately.

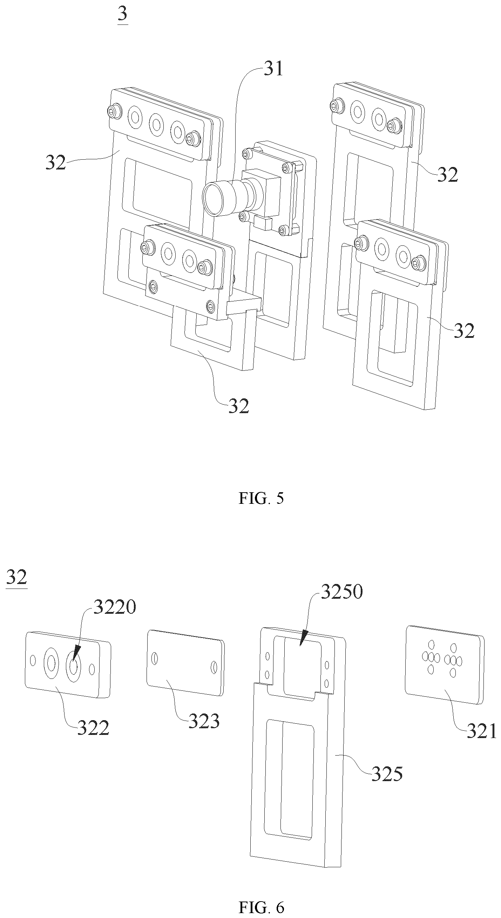

More specifically, as shown in FIGS. 4 and 5. In an optional embodiment, four calibration members 32 are provided, and the first of the four calibration members 32 and the third of the four calibration members 32 are arranged at intervals along the length direction of the vehicle to be detected 91; the second of the four calibration members 32 is located at the lower side of the first of the four calibration members 32 and at the side of the first of the four calibration members 32 adjacent to the vehicle to be detected 91, and the fourth of the four calibration members 32 is located at the upper side of the first of the four calibration members 32 and at the side of the first of the four calibration members 32 away from the vehicle to be detected 91.

The first camera 31 is arranged adjacent to the calibration member 32, and can be fixedly connected to any one of the four calibration members 32. In one embodiment, the calibration member 3 also includes a base plate 30, and when the magnetic base 2 is attracted in place on the bearing device 93, the base plate 30 is generally parallel to the ground. The first camera 31 and each calibration member 32 are fixedly arranged on the base plate 30.

As shown in FIGS. 3 and 4, in one embodiment, the calibration member 3 also includes a switching circuit plate 33, which is arranged on the base plate 30 and connected to the first camera 31 and the second control module, for powering the first camera 31 and transmitting the signal of the first camera 31 to the first control module 51.

In one embodiment, the calibration member 32 is a self-luminous calibration member 32, that is, the calibration member 32 forms a plurality of light spots by emitting light, and the light spots serve as calibration points.

Specifically, as shown in FIGS. 5 and 6, in one embodiment, each calibration member 32 includes a light plate 321 and a target plate 322 that are stacked, and the target plate 322 is fixed to the side of the light plate 321 facing the vehicle to be detected 91; the target plate 322 is provided with at least one through hole 3220, and the light emitted by the light plate 321 can pass through the through hole 3220, and the through hole 3220 forms a calibration point.

In addition, as shown in FIG. 6, each calibration member 32 also includes a fixing plate 325, the lower end of the fixing plate 325 is connected to the base plate 30, and the upper end of the fixing plate 325 is connected to the aforementioned light plate 321 and target plate 322, so that the light plate 321 and target plate 322 are kept at a distance above the base plate 30 and facing the vehicle to be detected 91. The stacking order between the fixing plate 325 and the light plate 321 and the target plate 322 is not limited, as long as the light plate 321 and the target plate 322 can be fixed together.

In an optional embodiment, each calibration member 32 further includes a diffuser plate 323, which is arranged between the light plate 321 and the target plate 322, and is configured to make the light plate 321 form a uniform surface light source and evenly illuminate the target plate 322, so that the brightness of each area in each through hole 3220 and different through holes 3220 is uniform and consistent, which is conducive to improving the detection accuracy of the calibration member 32 by the first camera 31.

In a specific embodiment, refer to FIG. 6, an opening 3250 is provided on the fixing plate 325, and the light plate 321 is arranged on the side of the fixing plate 325 away from the vehicle to be detected 91. The edge of the light plate 321 is fixedly connected to the opening 3250 of the fixing plate 325, and the light emitted by the light plate 321 can pass through the opening 3250; the diffuser plate 323 and the target plate 322 are arranged on the side of the fixing plate 325 adjacent to the vehicle to be detected 91. In other permitted cases, there may be other fixed connection sequences and methods between the light plate 321, the diffuser plate 323, the target plate 322 and the fixing plate 325.

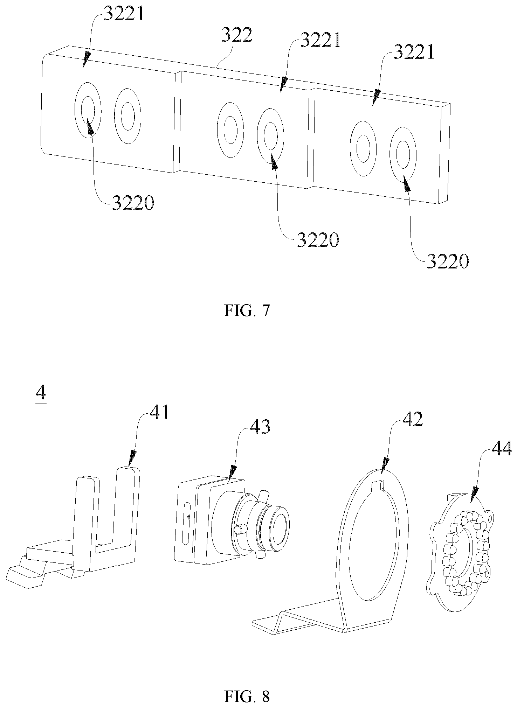

Alternatively, in one embodiment, one calibration member 32 is provided, including a light plate 321 and a target plate 322 that are stacked, and the target plate 322 is located on the side of the light plate 321 adjacent to the vehicle to be detected 91; as shown in FIG. 7, some of the target plates 322 away from the light plate 321 are provided with a plurality of step surfaces 3221, and the distances from each of the plurality of step surfaces 3221 to the light plate 321 are different; each of the plurality of step surfaces 3221 is provided with at least one through hole 3220, and the through hole 3220 forms a calibration point.

By arranging the plurality of step surfaces 3221, the distances between the calibration points on different step surfaces 3221 and the first camera 31 opposite are different.

Optionally, each of the plurality of step surfaces 3221 is arranged parallel to each other, and each of the plurality of step surfaces 3221 is perpendicular to the base plate 30. At this time, the distances from different calibration points to the first camera 31 are different.

At this time, a diffuser plate 323 can also be provided between the light plate 321 and the target plate 322.

In an optional embodiment, the light emitted by the light plate 321 is invisible light, and the first camera 31 forms an image based on the invisible light. For example, it may be infrared light, and the first camera 31 is configured to receive infrared light and form an image based on the infrared light. Invisible light can be distinguished from ambient light to avoid the influence of ambient light on the imaging of the first camera 31.

Next, as shown in FIGS. 3 and 4, in one embodiment, the first device 100 and the second device 200 both include two detection assemblies 4, which are respectively arranged on the left and right sides of the calibration member 3 and are respectively facing a front wheel and a rear wheel; as shown in FIG. 8, each detection assembly 4 includes a second camera 43; the first device 100 is arranged between the front wheel and the rear wheel on the right side of the vehicle to be detected 91, and the two second cameras 43 of the first device 100 are respectively tilted toward the front wheel and the rear wheel on the side to obtain the second image information of the auxiliary tools on the front wheel and the rear wheel on the side of the vehicle to be detected 91; the second device 200 is arranged between the front wheel and the rear wheel on the left side of the vehicle to be detected 91, and the two second cameras 43 of the second device 200 are respectively tilted toward the front wheel and the rear wheel on the side to obtain the second image information of the auxiliary tools on the front wheel and the rear wheel on the side of the vehicle to be detected 91.

In the control device, the first control module 51 is connected to each second camera 43 in the first device 100, and the second control module is connected to each second camera 43 in the second device 200 to receive the second image information of each second camera 43 and process the second image information. Since the four-wheel aligner determines the relative position relationship between the first device 100 and the second device 200 distributed on both sides of the vehicle to be detected 91, and the first device 100 and the second device 200 on both sides capture the second image information of the auxiliary tool fixed on the wheel to be measured 92 of the vehicle to be detected 91 through each second camera 43, it is convenient to realize the four-wheel alignment detection of the vehicle to be detected 91 according to the second image information and the relative position relationship between the first device 100 and the second device 200, and then obtain the four-wheel parameters of the vehicle to be detected 91.

As shown in FIG. 8, in one embodiment, the detection assembly 4 further includes a first mounting plate 41, the lower end of the first mounting plate 41 is fixedly connected to the base plate 30 of the calibration member 3, and the second camera 43 is arranged on the first mounting plate 41 so that the relative position between the second camera 43 and the base plate 30 is kept stability.

In an optional embodiment, the detection assembly 4 further includes a fill light 44, which is configured to fill light to the second camera 43 to improve the clarity and accuracy of the image detection of the wheel to be measured 92. The fill light 44 is annular and is configured to be arranged around the second camera 43. Among them, the detection assembly 4 may include a second mounting plate 42, the lower end of the second mounting plate 42 is fixedly connected to the first mounting plate 41 and/or the base plate 30, and the upper end of the second mounting plate 42 is annular, corresponding to the shape of the fill light 44, and the fill light 44 is mounted at the upper end of the second mounting plate 42.

The above description is only a preferred embodiment of the present application and is not intended to limit the present application. Any modifications, equivalent substitutions and improvements made within the spirit and principles of the present application should be included in the protection scope of the present application.

## Claims

1. A calibration system, comprising:
a first device (100), comprising a first camera (31); and
a second device (200), used in pairs with the first device (100), and comprising a calibration member (32), wherein the first device (100) and the second device (200) are respectively arranged on a side of a vehicle (91) to be detected where the wheel (92) to be measured is arranged; the first camera (31) of the first device (100) is configured to obtain first image information of the first camera (31) and the calibration member (32) of the second device (200) located on an opposite side; and
a control device, connected to the first camera (31), and is configured to receive the first image information from the first camera (31) and process the first image information.

2. The calibration system according to claim 1, wherein the second device (200) further comprises the first camera (31), the first device (100) further includes the calibration member (32), the first camera (31) of the second device (200) is configured to obtain the first image information of the calibration member (32) of the first device (100); the control device comprises a first control module (51) arranged in the first device (100), and a second control module arranged in the second device (200), the first control module (51) is connected to the first camera (31) of the first device (100), and the second control module is connected to the first camera (31) of the second device (200); and
the first control module (51) and the second control module are both connected to a control terminal for communication, the control terminal is configured to receive the first image information from the first control module (51) and the first image information from the second control module, and process the two first image information; or, the first control module (51) and the second control module are both connected to the control terminal for communication, the first control module (51) is configured to receive the first image information obtained by the control device from the second control module, and process the two first image information; or, the first control module (51) is configured to receive the first image information from the second control module, and process the two first image information.

3. The calibration system according to claim 1, wherein a plurality of calibration member (32)s are provided, and projections of the plurality of calibration members (32) along a width direction of the vehicle (91) to be detected do not overlap; along the width direction of the vehicle (91) to be detected, a distances between at least two calibration members (32) and the vehicle (91) to be detected are different; each of the plurality of calibration members (32) is provided with at least one calibration point.

4. The calibration system according to claim 3, wherein four calibration members (32) are provided, a first of the four calibration members (32) and a third of the four calibration members (32) are arranged at intervals along a length direction of the vehicle (91) to be detected; a second of the four calibration members (32) is located at a lower side of the first of the four calibration members (32) and at a side of the first of the four calibration members (32) adjacent to the vehicle (91) to be detected, and a fourth of the four calibration members (32) is located at an upper side of the first of the four calibration members (32) and at a side of the first of the four calibration members (32) away from the vehicle (91) to be detected.

5. The calibration system according to claim 3, wherein each of the plurality of calibration members (32) comprises a light plate (321) and a target plate (322) that are stacked, the target plate (322) is located on a side of the light plate (321) facing the vehicle (91) to be detected; the target plate (322) is provided with at least one through hole (3220), and the at least one through hole (3220) forms the calibration point.

6. The calibration system according to claim 1, wherein the calibration member (32) comprises a light plate (321) and a target plate (322) that are stacked, the target plate (322) is located on a side of the light plate (321) facing the vehicle (91) to be detected; the target plate (322) is provided with a plurality of step surfaces (3221) on a side away from the light plate (321), and distances from each of the plurality of step surfaces (3221) to the light plate (321) are different; each of the plurality of step surfaces (3221) is provided with at least one through hole (3220), and the at least one through hole (3220) forms a calibration point.

7. The calibration system according to claim 5 or 6, wherein the calibration member (32) further comprises a diffuser plate (323) arranged between the light plate (321) and the target plate (322).

8. The calibration system according to claim 5 or 6, wherein a light emitted by the light plate (321) is invisible light.

9. The calibration system according to any one of claims 1 to 6, wherein the first device (100) and the second device (200) both comprise a magnetic attraction seat (2), and the first device (100) and the second device (200) are fixed to a bearing device (93) for bearing the vehicle (91) to be detected through the magnetic attraction seat (2), and are respectively located on sides of the vehicle (91) to be detected where the wheel (92) to be measured is provided.

10. A four-wheel aligner, comprising the calibration system according to any one of claims 1 to 9; wherein the first device (100) and the second device (200) both comprise two second cameras (43); the two second cameras (43) of the first device (100) are configured to obtain second image information of auxiliary tools on front wheel and the rear wheel on a side of the vehicle (91) to be detected, and the two second cameras (43) of the second device (200) are configured to obtain second image information of auxiliary tools on a front wheel and a rear wheel on another side of the vehicle (91) to be detected; the control device is connected to each of the second cameras (43) to receive each of the second image information and process the second image information.
